# FASCICULE DE BREVET EUROPEEN

(11) **EP 2 135 780 B1**
(45) Date de publication et mention de la délivrance du brevet: **28.09.2011**
(21) Numéro de dépôt: 09290459.8
(22) Date de dépôt: 17.06.2009
(51) Int. Cl.: B60R 21/06

(54) **Dispositif de protection contre la projection de bagages d'un compartiment à bagages de véhicule automobile**
Schutzvorrichtung zum Schutz des Gepäcks in einem Kofferraum eines Kraftfahrzeugs
Device for protection against the projection of luggage in a luggage compartment of an automobile

(30) Priorité: 18.06.2008 FR 0803419
(43) Date de publication de la demande: 23.12.2009
(73) Titulaire: Centre d'étude et de recherche pour l'automobile (CERA), 51100 Reims (FR)
(72) Inventeur: Bayle, André-Xavier, 51100 Reims (FR); Debled, Emmanuel, 51100 Taissy (FR)
(74) Mandataire: Sayettat, Julien Christian

(56) Documents cités:
- EP-A- 0 995 641
- EP-A- 2 008 877
- WO-A-01/03973
- DE-C1- 19 944 003

## Description

L'invention concerne un dispositif de protection contre la projection de bagages d'un compartiment à bagages de véhicule automobile.

Divers documents décrivent un dispositif de protection contre la projection de bagages d'un compartiment à bagages de véhicule automobile ainsi que son montage.

Le document WO 01/03973 A décrit un dispositif de protection comprenant une nappe souple de protection et des moyens pour la mettre en tension.

Le document EP 995 641 A décrit un dispositif de protection comprenant une nappe de protection présentant une bordure supérieure souple et des moyens pour mettre ladite bordure en tension par traction effectuée vers le bas sur des points de traction disposés sur les angles inférieurs de ladite nappe.

Le document EP 2 008 877 A qui sert de base pour la présentation en deux parties de la revendication 1, décrit un dispositif comprenant une nappe de protection dont le bord inférieur est rigidifié par deux barres séparées en partie médiane dudit bord par une portion souple permettant son pliage.

Le document DE 199 44 003 C1 décrit un dispositif comprenant une nappe de protection dont le bord inférieur est rigidifié par deux barres articulées entre elles de manière à permettre son pliage.

Il est connu de réaliser un dispositif de protection contre la projection de bagages d'un compartiment à bagages de véhicule automobile, ledit dispositif comprenant :
- une nappe de protection en forme de trapèze de bases horizontales dont le bord supérieur forme la petite base et le bord inférieur forme la grande base,
- un moyen d'accrochage dudit bord supérieur qui est relié à la structure du véhicule,
- deux barres extrêmes de rigidification des parties extrêmes respectives dudit bord inférieur, lesdites barres étant séparées par une partie de bord inférieur souple de sorte à permettre un pliage dudit bord inférieur,
- deux liens d'ancrage en traction dudit bord inférieur qui sont ancrés par des moyens d'ancrage solidaires de la structure du véhicule, lesdits liens étant reliées à deux points de liaison respectifs disposés chacun sur ledit bord inférieur en regard de chacune desdites barres.

Un tel dispositif, une fois monté dans le véhicule entre le compartiment à bagages et l'habitacle, permet de protéger les passagers contre la projection de bagages dans l'habitacle en cas de collision.

La forme en trapèze de la nappe permet d'assurer un recouvrement des côtés du compartiment qui présente usuellement un rétrécissement progressif de sa largeur vers le haut.

Il est connu de prévoir que les liens une fois ancrés soient en position verticale.

Dans un tel dispositif, on observe que la tension de la nappe n'est pas optimale, aussi bien dans sa zone centrale que dans ses zones latérales triangulaires définies respectivement par un coin supérieur de la nappe, un point de liaison et un coin inférieur de la nappe.

L'invention a pour but de pallier cet inconvénient.

A cet effet, selon un premier aspect, l'invention propose un dispositif de protection contre la projection de bagages d'un compartiment à bagages de véhicule automobile, ledit dispositif comprenant :
- une nappe de protection en forme de trapèze de bases horizontales dont le bord supérieur forme la petite base et le bord inférieur forme la grande base,
- un moyen d'accrochage dudit bord supérieur qui est relié à la structure du véhicule,
- deux barres extrêmes de rigidification des parties extrêmes respectives dudit bord inférieur, lesdites barres étant séparées par une partie de bord inférieur souple de sorte à permettre un pliage dudit bord inférieur,
- deux liens d'ancrage en traction dudit bord inférieur qui sont ancrés par des moyens d'ancrage solidaires de la structure du véhicule, lesdits liens étant reliées à deux points de liaison respectifs disposés chacun sur ledit bord inférieur en regard de chacune desdites barres,
lesdits moyens d'ancrage étant disposés de sorte que lesdits liens définissent chacun avec ledit bord inférieur un angle externe - c'est à dire tourné vers l'extérieur - inférieur à 90°.

Lorsqu'il est dit que les points de liaison respectifs sont disposés chacun en regard de chacune desdites barres, cela signifie que les points de liaison sont disposés entre les extrémités de chaque barre.

Lorsqu'il est dit que les barres sont séparées par une partie de bord inférieur souple, cela exclut que les barres puissent être reliées entre elles par une articulation. On prévoit en effet que les barres de rigidification soient des barres extrêmes, ce qui exclut le fait que les barres en question puissent se rejoindre en un point d'articulation.

Dans cette description, les termes de positionnement dans l'espace (haut, bas, supérieur, inférieur, vertical, horizontal, ...) sont pris en référence au montage en position dans le véhicule.

L'agencement proposé permet d'assurer une tension optimale de la nappe, et ce sur toute sa surface.

En effet, le fait de mettre en jeu un angle externe inférieur à 90° permet d'assurer une tension accentuée du bord inférieur, de par l'existence d'une composante horizontale de force exercée vers l'extérieur par chaque lien.

Par ailleurs, dans la mesure où les points de liaison respectifs des liens sont disposés entre les extrémités de chaque barre, la partie de barre pointant vers l'intérieur à partir dudit point est bloquée en rotation du fait de la tension apportée au bord inférieur selon le fonctionnement explicité ci-dessus, et la barre est de ce fait elle même bloquée en rotation, ce qui permet d'assurer une tension optimisée de la nappe aussi bien en partie centrale que dans les zones latérales triangulaires définies respectivement par un coin supérieur de la nappe, un point de liaison et un coin inférieur de la nappe.

Selon un deuxième aspect, l'invention propose un dispositif destiné à être incorporé à un montage, dans lequel les barres ont sensiblement une longueur de un tiers de celle du bord inférieur.

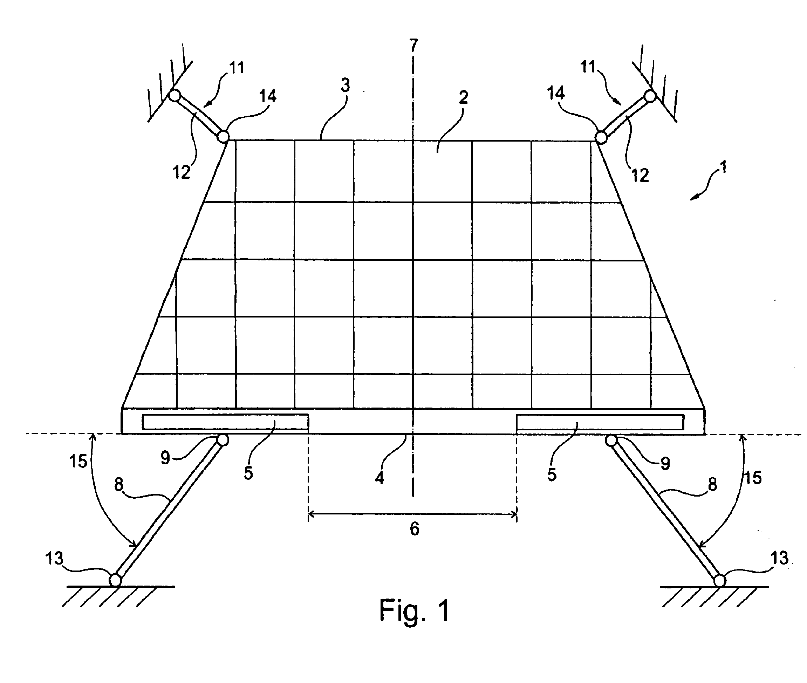

D'autres particularités et avantages de l'invention apparaîtront dans la description qui suit, faite en référence à la figure jointe qui est une représentation schématique de face du montage d'un dispositif selon une réalisation.

En référence à la figure, on décrit un mode de réalisation d'un dispositif 1 de protection contre la projection de bagages d'un compartiment à bagages de véhicule automobile, ledit dispositif comprenant :
- une nappe 2 de protection en forme de trapèze de bases horizontales dont le bord supérieur 3 forme la petite base et le bord inférieur 4 forme la grande base,
- un moyen d'accrochage 11 dudit bord supérieur qui est relié à la structure du véhicule,
- deux barres 5 extrêmes de rigidification des parties extrêmes respectives dudit bord inférieur, lesdites barres étant séparées par une partie 6 de bord inférieur 4 souple de sorte à permettre un pliage dudit bord inférieur,
- deux liens 8 d'ancrage en traction dudit bord inférieur qui sont ancrés par des moyens d'ancrage 13 solidaires de la structure du véhicule, lesdits liens étant reliées à deux points de liaison 9 respectifs disposés chacun sur ledit bord inférieur en regard de chacune desdites barres,
lesdits moyens d'ancrage étant disposés de sorte que lesdits liens définissent chacun avec ledit bord inférieur un angle externe 15 - c'est à dire tourné vers l'extérieur- inférieur à 90°.

Les points de liaison 9 sont disposés ici sensiblement en regard du centre de chaque barre 5.

La nappe 2 présente un axe de symétrie 7 vertical et les points de liaison 9 sont symétriques par rapport audit axe de symétrie.

Les barres 5 sont de même longueur. En particulier, les barres 5 ont sensiblement une longueur de un tiers de celle du bord inférieur 4, ce qui permet un pliage du bord inférieur en trois parties, correspondant à un encombrement réduit.

Les barres 5 sont enfilées dans une bordure tubulaire souple par exemple sous forme d'une bande textile repliée en longueur et cousue de sorte à former une ganse, formant le bord inférieur 4 de la nappe 2.

Le dispositif 1 comprend un bord supérieur 3 souple, c'est à dire non rigidifié par une barre, le moyen d'accrochage 11 dudit bord supérieur étant sous forme de deux organes de liaison 12, par exemple sous forme d'anneaux ou de tiges, respectivement accrochés aux coins supérieurs 14 de la nappe 2 et reliés à la structure du véhicule, lesdits organes étant disposés de sorte qu'une traction de la nappe 2 vers le bas entraîne une mise en tension dudit bord supérieur, ici par effet de rotation des organes 12 vers le bas qui entraîne la mise en tension attendue. Un tel agencement est décrit dans le document FR 2 784 633.

## Revendications

1. Dispositif (1) de protection contre la projection de bagages d'un compartiment à bagages de véhicule automobile, ledit dispositif comprenant :
• une nappe (2) de protection en forme de trapèze de bases horizontales dont le bord supérieur (3) forme la petite base et le bord inférieur (4) forme la grande base,
• un moyen d'accrochage (11) dudit bord supérieur qui est relié à la structure du véhicule,
• deux barres (5) extrêmes de rigidification des parties extrêmes respectives dudit bord inférieur, lesdites barres étant séparées par une partie (6) de bord inférieur (4) souple de sorte à permettre un pliage dudit bord inférieur,
• deux liens (8) d'ancrage en traction dudit bord inférieur qui sont ancrés par des moyens d'ancrage (13) solidaires de la structure du véhicule, lesdits liens étant reliées à deux points de liaison (9) respectifs disposés chacun en regard de chacune desdites barres,
ledit dispositif étant **caractérisé en ce que** lesdits moyens d'ancrage sont disposés de sorte que lesdits liens définissent chacun avec ledit bord inférieur un angle externe (15) inférieur à 90°.

2. Dispositif selon la revendication 1, **caractérisé en ce que** la nappe (2) présente un axe de symétrie (7) vertical et les points de liaison (9) sont symétriques par rapport audit axe de symétrie.

3. Dispositif selon la revendication 1 ou 2, **caractérisé en ce que** les barres (5) sont de même longueur.

4. Dispositif selon la revendication 3, **caractérisé en ce que** les barres (5) ont sensiblement une longueur de un tiers de celle du bord inférieur (4).

5. Dispositif selon l'une quelconque des revendications 1 à 4, **caractérisé en ce que** les barres (5) sont enfilées dans une bordure tubulaire souple formant le bord inférieur (4) de la nappe (2).

6. Dispositif selon l'une quelconque des revendications 1 à 5, **caractérisé en ce que** le dispositif (1) comprend un bord supérieur (3) souple, le moyen d'accrochage (11) dudit bord supérieur étant sous forme de deux organes de liaison (12) respectivement accrochés aux coins supérieurs (14) de la nappe (2) et reliés à la structure du véhicule, lesdits organes étant disposés de sorte qu'une traction de la nappe (2) vers le bas entraîne une mise en tension dudit bord supérieur.

7. Dispositif selon la revendication 4, **caractérisé en ce que** les barres (5) ont sensiblement une longueur de un tiers de celle du bord inférieur (4).

## Claims

1. Device (1) for protection against the projection of luggage in a luggage compartment of a motor vehicle, said device comprising:
- a trapezoid shaped protection ply (2) with horizontal bases of which the upper edge (3) forms the small base and the lower edge (4) forms the large base,
- an attachment unit (11) of the upper edge that is connected to the structure of the vehicle,
- two end bars (5) for stiffening the respective end parts of said lower edge, said bars being separated by a flexible portion (6) of lower edge (4) in such a way as to allow for a folding of said lower edge,
- two anchoring links (8) in traction of said lower edge which are anchored by anchoring units (13) integral with the structure of the vehicle, said links being connected to two respective connection points (9) each arranged across from each of said bars,
said device being **characterised in that** said anchoring unit is arranged in such a way that said links each define an exterior angle (15) less than 90° with said lower edge.

2. Device according to claim 1, **characterised in that** the ply (2) has a vertical axis of symmetry (7) and the connection points (9) are symmetrical in relation to said axis of symmetry.

3. Device according to claim 1 or 2, **characterised in that** the bars (5) are of the same length.

4. Device according to claim 3, **characterised in that** the bars (5) have substantially a length of one-third that of the lower edge (4).

5. Device according to any of claims 1 to 4, **characterised in that** the bars (5) are threaded in a flexible tubular edge forming the lower edge (4) of the ply (2).

6. Device according to any of claims 1 to 5, **characterised in that** the device (1) comprises a flexible upper edge (3), the attachment unit (11) of said upper edge having the form of two connection members (12) respectively attached to the upper corners (14) of the ply (2) and connected to the structure of the vehicle, said members being arranged in such a way that a downward traction of the ply (2) results in a tensioning of said upper edge.

7. Device according to claim 4, **characterised in that** the bars (5) substantially have a length of one-third of that of the lower edge (4).

## Patentansprüche

1. Vorrichtung (1) zum Schutz des Gepäcks in einem Kofferraum eines Kraftfahrzeugs, wobei die Vorrichtung Folgendes umfasst:
- ein Schutznetz (2) in Form eines Trapezes mit horizontalen Basen, wobei der obere Rand (3) die kleine Basis und der untere Rand (4) die große Basis bildet,
- ein Mittel zur Befestigung (11) des oberen Randes, verbunden mit der Struktur des Fahrzeugs,
- zwei äußere Stangen (5) zur Versteifung der entsprechenden äußeren Teile des unteren Rands, wobei die Stangen durch einen Teil (6) des flexiblen unteren Rands (4) getrennt sind, um ein Biegen des unteren Rands zu ermöglichen,
- zwei Verbindungen (8) zur Zugverankerung des unteren Rands, die durch Verankerungsmittel (13) verankert sind, die mit der Struktur des Fahrzeugs einstückig sind, wobei die Verbindungen mit zwei entsprechenden Verbindungspunkten (9) verbunden sind, die jeweils hinsichtlich jeder der Stangen angeordnet sind,
wobei die Vorrichtung **dadurch gekennzeichnet ist, dass** die Verankerungsmittel so angeordnet sind, dass die Verbindungen jeweils mit dem unteren Rand einen externen Winkel (15) von weniger als 90° definieren.

2. Vorrichtung nach Anspruch 1, **dadurch gekennzeichnet, dass** das Netz (2) eine vertikale Symmetrieachse (7) aufweist und die Verbindungspunkte (9) symmetrisch bezüglich der Symmetrieachse sind.

3. Vorrichtung nach Anspruch 1 oder 2, **dadurch gekennzeichnet, dass** die Stangen (5) die gleiche Länge aufweisen.

4. Vorrichtung nach Anspruch 3, **dadurch gekennzeichnet, dass** die Stangen (5) im Wesentlichen eine Länge eines Drittels derjenigen des unteren Rands (4) aufweisen.

5. Vorrichtung nach einem der Ansprüche 1 bis 4, **dadurch gekennzeichnet, dass** die Stangen (5) in eine rohrförmige flexible Einfassung eingeführt sind, die den unteren Rand (4) des Netzes (2) bildet.

6. Vorrichtung nach einem der Ansprüche 1 bis 5, **dadurch gekennzeichnet, dass** die Vorrichtung (1) einen flexiblen oberen Rand (3) umfasst, wobei das Befestigungsmittel (11) des oberen Rands die Form von zwei Verbindungsorganen (12) aufweist, die jeweils an die oberen Ecken (14) des Netzes (2) befestigt sind und mit der Struktur des Fahrzeugs verbunden sind, wobei die Organe so angeordnet sind, dass ein Ziehen des Netzes (2) auf die Unterseite eine Spannung des oberen Rands verursacht.

7. Vorrichtung nach Anspruch 4, **dadurch gekennzeichnet, dass** die Stangen (5) im Wesentlichen eine Länge eines Drittels derjenigen des unteren Rands (4) aufweisen.
